# EUROPÄISCHE PATENTANMELDUNG

(11) **EP 4 417 548 A1**
(43) Veröffentlichungstag der Anmeldung: **21.08.2024**
(21) Anmeldenummer: 24157723.8
(22) Anmeldetag: 15.02.2024
(51) Int. Cl.: B65G 17/20, B65G 47/61

(54) **HÄNGEFÖRDERER**

(30) Priorität: 17.02.2023 CH 1582023
(71) Anmelder: Ferag AG, 8340 Hinwil (CH)
(72) Erfinder: Hohl, Urs, 8854 Siebnen (CH)
(74) Vertreter: Rentsch Partner AG

(57) **Zusammenfassung**

Typischerweise umfasst der Hängeförderer gemäss der Offenbarung eine Schiene und ein Fördermittel, das in einer Förderrichtung beweglich an der Schiene gelagert ist und Mitnehmer umfasst, zur lösbaren Halterung von hängenden Transportmitteln. In einer vorteilhaften Ausführungsform der Offenbarung umfasst der Hängeförderer eine spezielle Räumungsanordnung zur Räumung zumindest eines Abschnitts der Schiene von Transportmitteln. Die Räumungsanordnung umfasst in der Regel einen Abräumer, der entweder mit einem Führungslager entlang des Schienenabschnitts beweglich angeordnet ist und ein Abräumelement umfasst oder feststehend angeordnet ist. Ferner umfasst die Räumungsanordnung eine Betätigungsanordnung, die dazu ausgebildet ist den Abräumer von einem Bereitschaftszustand in einen Abräumzustand zu versetzen. Das Abräumelement ist typischerweise dazu ausgebildet, im Abräumzustand durch eine Relativbewegung des Abräumers zum Fördermittel die Transportmittel von den Mitnehmern im Schienenabschnitt zu lösen.

## Beschreibung

### GEBIET DER OFFENBARUNG

Die vorliegende Offenbarung betrifft einen Hängeförderer umfassend eine Räumungsanordnung zur Räumung zumindest eines Abschnitts einer Schiene von Transportmitteln.

### HINTERGRUND DER OFFENBARUNG

DE1290491B veröffentlicht am 06.03.1969 im Namen der Dürkoppwerke GmbH betrifft einen Umlauf-Hängeförderer mit an einem Zugmittel angeschlossenen, in einer Schienenbahn laufenden Förderwagen, welche eine Zielbestimmungsvorrichtung sowie eine Einhängevorrichtung für einen schlitten- oder wagenartigen, ausserhalb des Förderers auf einer Schiene verschiebbaren Fördergutträger besitzen. Ferner sind längs der Schienenbahn des Förderers Arbeitsplätze angeordnet, denen je eine Annahme- und Aufgabevorrichtung für einen Fördergutträger zugeordnet sind.

US4287829A veröffentlicht am 08.09.1987 im Namen von Nakanishi Metal Works Co., Ltd. betrifft einen Förderer umfassend eine Anzahl von Mitnehmern, die an einer Antriebskette an einer Stromleitung befestigt sind. Jedes Mitnehmerstützelement umfasst einen Mitnehmer, der an seinem oberen Teil schwenkbar gelagert ist, und einen Stopper, der den Mitnehmer in einer vertikalen, nach unten gerichteten Position anhält, in der der Mitnehmer mit dem freien Wagen in einem Träger auf einer freien Leitung in Eingriff kommen kann. Der Stopper hat einen sich nach aussen erstreckenden Teil, der den Schieber aus dem Eingriff nimmt. Eine Ausrückvorrichtung ist auf einem Förderband an einer Stelle angeordnet, an der der Träger zum Stillstand gebracht werden soll. Die Ausrückvorrichtung verfügt über ein Anhebeelement, das in den Bewegungspfad des Ausrückteils des Stoppers ragt. Wenn der Träger den Ort erreicht, kommt der Ausrücker des Stoppers in Kontakt mit dem Anhebeelement des Stoppers, das bereits in den Weg hineinragt, und der Stopper wird angehoben, woraufhin der Ausrücker vom Stopper gelöst und vom Wagen abgekoppelt wird. Dadurch wird der Wagen zum Stillstand gebracht.

### ZUSAMMENFASSUNG DER OFFENBARUNG

Hängefördersysteme haben sich in automatisierten Warenlagern, in ausgedehnten Produktionsstätten und ganz allgemein zum Transport und zur Förderung von Gütern als effizientes Mittel zum Transport, zur Zwischenpufferung, zur Sortierung, aber auch zur Langzeitlagerung von Gütern aller Art bewährt. Insbesondere variierende Stückgüter, wie Bekleidung, Konsumgüter oder Dergleichen können damit effizient transportiert werden. Bei Hängefördersystemen werden die Güter entweder in geeigneter Weise direkt an einzelnen Fördermitteln des Hängeförderers aufgehängt oder mit geeigneten Transportmitteln, wie z. B. Transporttaschen oder Kleiderbügeln, die ihrerseits hängend an den Fördermitteln gelagert werden, aufgenommen und befördert.

Hängeförderer sind in der Regel weitläufige Anlagen und erstrecken sich oft zwischen Gebäuden, bzw. über Gebäudeteile hinweg, die mittels (Brandschutz-)Türen verbunden sind. Ein mögliches Anwendungsgebiet der Offenbarung betrifft die Handhabung von Gefahrensituationen, denn hierbei müssen diese Türen störungsfrei geschlossen werden können. Räumungsanordnungen gemäss der Offenbarung können verwendet werden um im Falle einer Gefahrensituation, beispielsweise im Brandfall, vorbestimme Schienenabschnitte des Hängeförderers von Transportmitteln zu räumen. Denn befinden sich Transportmittel mit Transportgut im Bereich der Türen, so können die Transportmittel (und das Transportgut) ein Schliessen der Türen behindern oder gänzlich verhindern. Hängefördersysteme, insbesondere Hängeförderer, aus dem Stand der Technik verfügen jedoch über keine zufriedenstellende Räumungsanordnung zur Räumung von Schienenabschnitten von den darin befindlichen Transportmitteln.

Es ist daher eine Aufgabe der Offenbarung den Stand der Technik dahingehend weiterzuentwickeln. Räumungsanordnungen gemäss der Offenbarung können in vielerlei Hinsicht eingesetzt werden. Ein Hängeförderer gemäss der Offenbarung umfassend eine Räumungsanordnung adressiert die Nachteile des Stands der Technik.

Typischerweise umfasst der Hängeförderer gemäss der Offenbarung eine Schiene und ein Fördermittel, das in einer Förderrichtung beweglich an der Schiene gelagert ist und Mitnehmer zur lösbaren Halterung von hängenden Transportmitteln umfasst.

Als Fördermittel kann im Rahmen der vorliegenden Offenbarung beispielsweise ein Transportwagen oder eine Förderkette verstanden werden. Der Hängeförderer kann dabei als Umlaufförderer ausgebildet sein. Die Mitnehmer des Fördermittels können zur lösbaren Halterung von hängenden Transportmitteln als Haken, Ösen, Stangen oder dergleichen ausgebildet sein. Nach Anwendungsgebiet kann das Fördermittel als kontinuierliches Umlauffördermittel, beispielsweise in Form einer Förderkette, ausgebildet sein.

In einer vorteilhaften Ausführungsform der Offenbarung umfasst der Hängeförderer eine spezielle Räumungsanordnung zur Räumung zumindest eines Abschnitts der Schiene von Transportmitteln. Transportmittel sind insbesondere Kleiderbügel oder Transporttaschen, welche ein Haltemittel aufweisen, mit welchem diese lösbar an den Mitnehmern des Fördermittels anbringbar sind. Das Haltemittel der Transportmittel kann beispielsweise als Haken oder Öse ausgebildet sein. Die Mitnehmer sind entsprechend der Haltemittel ausgebildet.

Die Räumungsanordnung umfasst in der Regel einen Abräumer, mit einem Abräumelement, welches mit den an der Schiene angeordneten Transportmitteln in Eingriff bringbar ist. Der Abräumer kann fest, beispielsweise an der Schiene oder auch an einer Gebäudewand angeordnet sein. Alternativ kann der Abräumer mit einem Führungslager beweglich entlang eines Abschnitts der Schiene angeordnet sein. Typischerweise ist der Abräumer in einem eigenen Schienenstück entlang der Schiene beweglich angeordnet. Das Schienenstück des Abräumers kann an der Schiene angebracht sein.

Ferner umfasst die Räumungsanordnung eine Betätigungsanordnung, die dazu ausgebildet ist den Abräumer von einem Bereitschaftszustand in einen Abräumzustand zu versetzen. Das Abräumelement ist typischerweise dazu ausgebildet, im Abräumzustand durch eine Relativbewegung des Abräumers zum Fördermittel die Transportmittel von den Mitnehmern im Schienenabschnitt zu lösen.

Je nach Ausgestaltung ist die Betätigungsanordnung dazu ausgebildet, den Abräumer entlang des Schienenabschnitts zu bewegen. In alternativen Ausführungsformen ist die Betätigungsanordnung lediglich dazu ausgebildet einen ortsfesten Abräumer, der fix in seiner Position relativ zur Schiene angeordnet ist, von einem Bereitschaftszustand in einen Abräumzustand zu versetzen. Hierbei wird die Relativbewegung des Fördermittels zum Abräumer durch die Bewegung des Fördermittels entlang der Schiene erreicht.

Die Relativbewegung das Abräumers zum Fördermittel kann, je nach Ausgestaltung, bei einem Stillstand des (oder der) Fördermittels durch die Bewegung des Abräumers entlang des Schienenabschnitts erreicht werden. Bevorzugt weisst die Betätigungsanordnung hierzu einen Seilzug auf. Der Seilzug verbindet das Abräumelement mit einem gesicherten Gewicht, wobei das Gewicht dazu ausgelegt ist, nach Freigabe mittels Seilzug eine Zugkraft auf das Abräumelement auszuüben. In einer bevorzugten Ausführungsform ist das Gewicht mittels eines Elektromagneten gesichert. Dies hat den Vorteil, im Fall eines Stromausfalls beziehungsweise einer Elektrizitätsunterbrechung zur Freigabe des Gewichts zu führen. Auf diese Art kann ein autonomes Auslösen der Betätigungsanordnung und damit des Abräumers erreicht werden.

In einigen Ausführungsformen ist das Abräumelement dazu ausgebildet, im Abräumzustand die gelösten Transportmittel zu tragen. Dies ist vorteilhaft, da die gelösten Transportmittel vom Abräumelement des Abräumers aus dem zu räumenden Bereich des Hängeförderers heraus transportiert werden. Ist die Räumungsanordnung im Schliessbereich einer Brandschutztür angeordnet, wird so ein unbehindertes Schliessen der Tür ermöglicht. Alternativ kann die Räumungsanordnung auch dazu ausgerichtet sein einen Abschnitt der Schiene vor einem Fenster, einer Luke oder allgemein einer Öffnung, wie beispielsweise auch vor einem Tor zu räumen.

In einigen Ausführungsformen ist das Abräumelement an einer Basis das Abräumers zwischen einer Bereitschaftsposition und einer Abräumposition um eine Schwenkachse schwenkbar angeordnet. Die Schwenkachse kann senkrecht zur Förderrichtung ausgerichtet sein.

Je nach Ausgestaltung weisst der Abräumer eine Kippvorrichtung auf, die zwischen dem Führungslager und dem Abräumelement angeordnet und dazu eingerichtet ist das Abräumelement relativ zum Führungslager um eine Kippachse von einer Bereitschaftsposition in eine Kippposition zu bewegen. Die Kippvorrichtung kann alternativ oder in Ergänzung zur schwenkbaren Anordnung des Abräumelements vorgesehen sein. Die Kippachse ist vorzugsweise parallel zur Förderrichtung angeordnet. Insbesondere ist die Basis von der Kippvorrichtung um eine Kippachse neigbar, wenn der Abräumer vom Bereitschaftszustand in den Abräumzustand versetzt wird.

In einigen Ausführungsformen weisst die Kippvorrichtung mindestens ein Federelement auf. Das Federelement ist in der Bereitschaftsposition vorgespannt und durch ein Rückhaltelement arretiert. Das Rückhalteelement kann von einem Sicherungsfinger des Abräumers gesichert sein, so dass der Sicherungsfinger durch das Verschwenken das Abräumelements das Rückhalteelement freigibt und das vorgespannte Federelement das Abräumelement von der Bereitschaftsposition in die Kippposition bewegt. Das Federelement der Kippvorrichtung ist insbesondere mit seiner Federachse senkrecht zur Kippachse angeordnet. Je nach Ausgestaltung ist die Kippvorrichtung als Parallelogramm ausgebildet, wobei das Federelement zwei gegenüberliegende Eckpunkte des Parallelogramms verbindet. Das Parallelogramm umfasst vorzugsweise wenigstens zwei parallele Verbindungselemente, die jeweils ein Oberteil und die Basis über Drehlager verbinden. Das Oberteil ist üblicherweise parallel zur Basis ausgerichtet, sodass das Oberteil parallel mit der Basis um eine zweite Kippachse verkippbar ist. Die zweite Kippachse ist im Wesentlichen parallel zur (ersten) Kippachse.

In einigen Ausführungsformen ist ein Stoppelement an der Kippvorrichtung angeordnet, das in der Bereitschaftsposition an einem in Bezug auf den Schienenabschnitt fixen Anschlag anliegt, um den Abräumer in einer Startposition zu halten und die Bewegung des Abräumers entlang des Schienenabschnitts in der Kippposition freizugeben. Vorzugsweise ist das Stoppelement am Oberteil der Kippvorrichtung angeordnet, sodass das Stoppelement um die zweite Kippachse verkippbar ist. Das Stoppelement kann beispielsweise als Stoppfinger, Hebel, Anschlag oder als Stift ausgebildet sein.

In einer bevorzugten Ausführungsform verbindet mindestens ein (weiteres) Federelement das Abräumelement und die Basis, sodass das Abräumelement über einen Totpunkt von der Bereitschaftsposition in die Abräumposition schwenkbar ist und ein Zurückschwenken erschwert wird. Dies hat unter anderem den Vorteil, dass das Abräumelement in der Bereitschaftsposition vor einem unbeabsichtigtem Verschwenken in die Abräumposition gesichert ist.

In einigen Ausführungsformen weisst das Abräumelement ein Schwert auf, mit einem Löseabschnitt und einem daran angrenzenden Sammelabschnitt. Der Löseabschnitt ist vorzugsweise dazu ausgebildet die Transportmittel von den Mitnehmern zu lösen und der Sammelabschnitt ist vorzugsweise dazu ausgebildet die gelösten Transportmittel zu sammeln und zu tragen.

In bevorzugten Ausführungsformen weisst der Löseabschnitt eine Kontaktkontur auf, die in der Abräumposition des Schwerts derart ausgerichtet ist, dass diese zum Sammelabschnitt hin eine Steigung zum Anheben der Transportmittel von den Mitnehmer bildet. Alternativ oder in Ergänzung, ist die Kontaktkontur derart ausgerichtet, dass diese zum Sammelabschnitt hin eine Schräge zum seitlichen Wegbewegen der Transportmittel von den Mitnehmen bildet.

Die Steigung und die Schräge sind vorzugsweise derart ausgebildet, dass das Anheben und das Wegbewegen der Transportmittel von den Mitnehmern in einer überlagerten Bewegung erfolgt. Die Kontaktkontur kann beispielsweise als Kante ausgebildet sein. Das Schwert ist vorteilhaft aus (Stanz-)Blech hergestellt um die nötige Steifigkeit bei gleichzeitiger Kosteneffizienz zu gewährleisten. Es sind jedoch auch Alternativen möglich, so kann das Schwert aus einem stangenförmigen Element hergestellt sein, dass eine Kante als Kontaktkontur des Löseabschnitts bereitstellt.

Am proximalen Ende des Löseabschnitts ist vorzugsweise eine Anlaufschräge angeordnet. Diese Anlaufschräge stellt bei der Relativbewegung initial den Kontakt zwischen dem Schwert und den Haltemitteln der Transportmittel her. Die Anlaufschräge leitet in die Steigung und/oder die Schräge des Löseabschnitts über, sodass beim Kontakt mit den Haltemitteln zu grosse Beschleunigungen vermieden werden und diese nicht unkontrolliert von den Mitnehmern gelöst werden.

Der Sammelabschnitt ist vorzugsweise als mindestens eine Einbuchtung (des Abräumelements bzw. des Schwerts) ausgebildet, deren distales Ende von einem Anschlag, insbesondere von einer Nase gebildet wird. Die gelösten Transportmittel werden typischerweise in dieser Einbuchtung gesammelt und getragen. Die Nase kann eine Krümmung aufweisen, so dass diese hakenförmig ausgebildet ist. Dies erlaubt ein sicheres Sammeln der Transportmittel und minimiert das Risiko eines versehentlichen Herunterfallens der gelösten Transportmittel.

Um im Abräumzustand ein Verdrehen des Abräumelements um eine Achse parallel zur Förderrichtung zu minimieren, bildet das Führungslager vorzugsweise ein Widerlager für das Abräumelement. Hierzu umfasst das Führungslager mindestens ein Lager, insbesondere zwei Lager, vorzugsweise drei Lager. Je nach Ausgestaltung ist das mindestens eine Lager als Rollenlager oder Gleitlager ausgebildet, wobei dessen Rotationsachse im Wesentlichen senkrecht zur Förderrichtung ausgerichtet ist. Im Fall von zwei oder drei Rollenlagern, sind die Rotationsachsen parallel und/oder senkrecht zueinander ausgerichtet. Vorzugsweise umfasst das Führungslager eine Führungsschiene, insbesondere in Form eines Schienenstücks, die entlang des zu räumenden Schienenabschnitts des Hängeförderers angeordnet ist. Je nach Anwendungsgebiet, kann der Abräumer zwei oder mehr Führungslager aufweisen. Vorzugsweise sind die Führungslager in Förderrichtung hintereinander oder/und nebeneinander angeordnet.

Je nach Ausgestaltung weisen die Transportmittel hakenförmige oder ösenförmige Haltemittel auf. Die Transportmittel sind insbesondere als Kleiderbügel und/oder Transporttaschen ausgebildet. Transportmittel im Sinne der vorliegenden Offenbarung sind jedoch nicht auf Kleiderbügel oder Transporttaschen beschränkt, sondern umfassen weitere dem hängenden Transport zugängliche Transportmittel, wie zum Beispiel Transport-Netze, -Beutel oder -Tragegestelle oder Transportschlaufen.

Im Bereitschaftszustand können die Schwenkachse und die Kippachse im Wesentlichen senkrecht zueinander ausgerichtet sein. Während des Verkippens der Basis um die Kippachse wird die Schwenkachse ebenfalls gekippt, wobei diese senkrecht zur Kippachse bleibt. Die Kippachse ist insbesondere im Wesentlichen parallel zur Förderrichtung ausgerichtet. Die Schwenkachse ist insbesondere im Wesentlichen senkrecht zur Förderrichtung ausgerichtet. Das heisst, im Bereitschaftszustand ist die Schwenkachse vertikal im Raum ausgerichtet und die Kippachse horizontal.

Für eine zuverlässige Funktionsweise des Abräumers, ist die Kippvorrichtung vorzugsweise als Parallelogramm ausgebildet. Das Parallelogramm umfasst typischerweise die Basis, ein der Basis gegenüber angeordnetes Oberteil und mindestens zwei Verbindungselemente. Die Verbindungselemente sind jeweils mit dem Oberteil über ein Drehlager und mit der Basis über ein Drehlager verbunden. Das mindestens eine Federelement der Kippvorrichtung verbindet hierbei die Drehlager des Parallelogramms diagonal. Das im Bereitschaftszustand vorgespannte Federelement, bewirkt nach dessen Freigabe eine Auslenkung der Basis gegenüber dem Oberteil des Parallelogramms, vorzugsweise indem Basis und Oberteil verkippt werden (parallel zueinander).

In vorteilhaften Ausführungsformen weisst die Betätigungsanordnung einen Seilzug auf, der das Abräumelement mit einem gesicherten Gewicht verbindet. Das Gewicht ist vorzugsweise dazu ausgelegt nach dessen Freigabe mittels des Seilzugs eine Zugkraft auf das Abräumelement auszuüben. Je nach Ausgestaltung ist das Zugseil an einem Befestigungspunkt am Schwert des Abräumers befestigt.

Der Befestigungspunkt ist vorzugsweise von der Schwenkachse ausgehend nach aussen versetzt angeordnet, sodass eine eingeleitete Zugkraft am Befestigungspunkt ein Drehmoment auf das Schwert um die Schwenkachse bewirkt. In manchen Ausführungsformen, ist das Gewicht mit einem elektrischen Sicherungsmechanismus gesichert. Vorzugsweise ist der Sicherungsmechanismus eingerichtet, im Fall eines Stromausfalls oder eines Stromunterbruchs, das Gewicht freizugeben. Beispielsweise kann der Sicherungsmechanismus einen Elektromagneten umfassen, um das Gewicht mittels einer Magnetkraft zu halten.

Weiterhin wird ein Verfahren zum bereichsweisen Abräumen der Schiene des Hängeförderers vorgeschlagen, welches zumindest die folgenden Schritte umfasst:
- Bereitstellen eines Hängeförderers umfassend eine Schiene und ein Fördermittel das in einer Förderrichtung beweglich an der Schiene gelagert ist und Mitnehmer zur lösbaren Halterung von hängenden Transportmitteln umfasst;
- Bereitstellen einer Räumungsanordnung entlang eines Abschnitts der Schiene, die einen Abräumer mit einem Abräumelement umfasst, sowie einer Betätigungsanordnung, die dazu ausgebildet ist den Abräumer von einem Bereitschaftszustand in einen Abräumzustand zu versetzten;
- In Eingriff bringen des Abräumelements mit den Transportmitteln und Überführen des Abräumelements in einen Abräumzustand durch eine Relativbewegung des Abräumers zum Fördermittel wodurch die Transportmittel von den Mitnehmern im Schienenabschnitt gelöst werden.

Der Abräumer kann ein Führungslager umfassen, mittels dem der Abräumer an dem Schienenabschnitt beweglich angeordnet ist und im Abräumzustand mittels der Betätigungsanordnung entlang des Schienenabschnitts bewegt wird. Vorzugsweise wird das Führungslager in einem eigenen Schienenstücks bewegt. Das Abräumelement kann an einer Basis des Abräumers zwischen einer Bereitschaftsposition und einer Abräumposition um eine Schwenkachse schwenkbar angeordnet sein.

In einer Variante weist der Abräumer eine Kippvorrichtung auf und das Abräumelement kann in der Abräumposition relativ zum Führungslager um eine Kippachse von einer Bereitschaftsposition in eine Kippposition bewegt werden. Die Kippvorrichtung kann mindestens ein Federelement aufweisen, welches in der Bereitschaftsposition vorgespannt ist und durch ein Rückhalteelement arretiert ist. Das Rückhalteelement gibt üblicherweise im Abräumzustand das vorgespannte Federelement frei und durch das Federelement wird somit das Abräumelement von der Bereitschaftsposition in die Kippposition bewegt.

Ein Stoppelement kann an der Kippvorrichtung angeordnet sein, das in der Bereitschaftsposition an einem in Bezug auf den Schienenabschnitt fixen Anschlag anliegt und den Abräumer in einer Startposition hält und die Bewegung des Abräumers in dem Abräumzustand freigibt.

Die Merkmale des erfindungsgemässen Hängeförderers treffen auch auf das Verfahren zum bereichsweisen Abräumen der Schiene des Hängeförderers zu und umgekehrt.

### KURZE BESCHREIBUNG DER ZEICHNUNGEN

Anhand der in den nachfolgenden Figuren gezeigten Ausführungsbeispiele und der dazugehörigen Beschreibung werden Aspekte der Offenbarung näher erläutert. Es zeigen:
- **Figur 1**: eine erste Ausführungsform eines Hängeförderers gemäss der Offenbarung in einer perspektivischen Darstellung;
- **Figur 2**: eine erste Ausführungsform einer Räumungsanordnung gemäss der Offenbarung in einer perspektivischen Darstellung;
- **Figur 3**: eine vergrösserte Ansicht der ersten Ausführungsform einer Räumungsanordnung gemäss der Offenbarung;
- **Figur 4**: einen Schienenabschnitt eines Hängeförderers gemäss der Offenbarung mit der ersten Ausführungsform der Räumungsanordnung im Bereitschaftszustand in einer perspektivischen Darstellung;
- **Figur 5**: den Hängeförderer von **Figur 4** mit der ersten Ausführungsform der Räumungsanordnung im Abräumzustand in einer perspektivischen Darstellung;
- **Figur 6**: ebenfalls den Hängeförderer von **Figur 4** mit der ersten Ausführungsform der Räumungsanordnung im Abräumzustand in einer weiteren perspektivischen Darstellungen;
- **Figur 7**: den Abräumer der ersten Ausführungsform in einer seitlichen Ansicht im Bereitschaftszustand;
- **Figur 8**: den Abräumer von **Figur 7** in einer weiteren Seitenansicht;
- **Figur 9**: ein Abräumelement das Abräumers der ersten Ausführungsform in einer perspektivischen Ansicht von oben;
- **Figur 10**: das Abräumelement von **Figur 9** in einer perspektivischen seitlichen Ansicht;
- **Figur 11**: eine schematische Schnittdarstellung einer zweiten Ausführungsform des Abräumers, wobei die durchgezogenen Linien den Bereitschaftszustand andeuten und die gestrichelten Linien den Abräumzustand;
- **Figur 12**: eine schematische Schnittdarstellung einer dritter Ausführungsform des Abräumers im Bereitschaftszustand;
- **Figur 13**: den Abräumer von **Figur 12** im Abräumzustand;
- **Figur 14**: eine Einbausituation eines offenbarungsgemässen Hängeförderers an einer Tür;
- **Figur 15**: die Einbausituation von **Figur 14** mit geschlossener Tür; und
- **Figur 16**: die erste Ausführungsform in einer Einbausituation mit einer Tür in einer Seitenansicht.

### BESCHREIBUNG DER AUSFÜHRUNGSFORMEN

Es wird nun im Detail auf bestimmte Ausführungsformen verwiesen, die in den beigefügten Zeichnungen beispielhaft dargestellt sind, in denen einige, aber nicht alle Merkmale gezeigt werden. In der Tat können die hier offengelegten Ausführungsformen in vielen verschiedenen Formen verkörpert werden und sollten nicht als auf die hier dargelegten Ausführungsformen beschränkt verstanden werden; vielmehr werden diese Ausführungsformen bereitgestellt, damit diese Offenbarung den geltenden rechtlichen Anforderungen genügt. Wann immer möglich, werden gleiche Referenznummern verwendet, um auf gleiche Komponenten oder Teile zu verweisen.

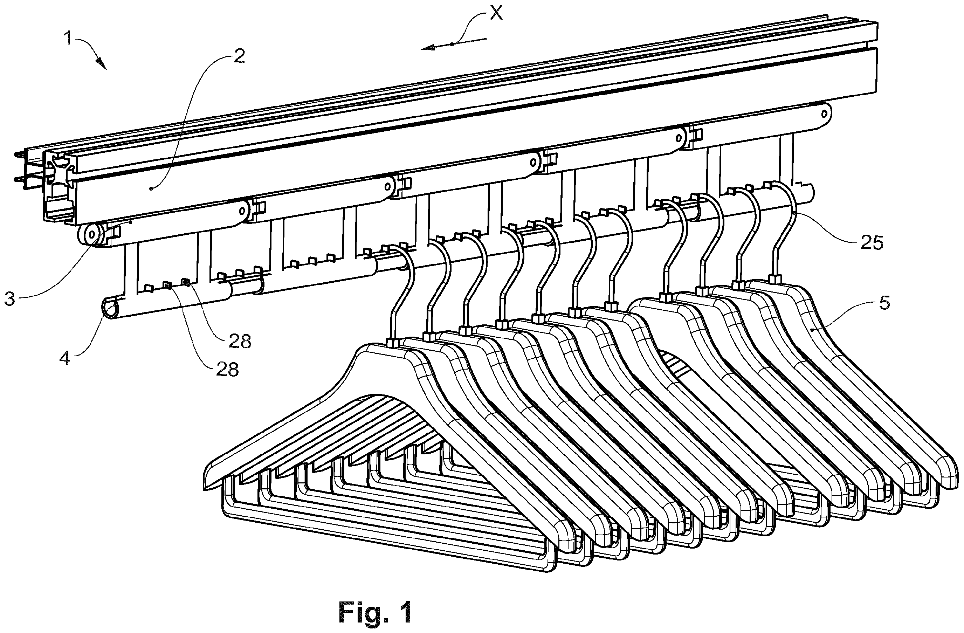

**Figur 1** zeigt eine erste Ausführungsform eines Hängeförderers 1 gemäss der Offenbarung in einer perspektivischen Darstellung. Der Hängeförderer 1 weist eine Schiene 2 und ein daran beweglich gelagertes Fördermittel 3 auf. Das Fördermittel 3 ist in der hier dargestellten Ausführungsform ein kontinuierliches Fördermittel 3, das aus einzelnen, miteinander verbundenen Gliedern besteht. Das Fördermittel 3 weist Mitnehmer 4 zur lösbaren Halterung von hängenden Transportmitteln 5 auf. Die Mitnehmer 4 sind hier jeweils stangenförmig ausgebildet und mit den Gliedern verbunden. Die Mitnehmer 4 der ersten Ausführungsform können jeweils ein oder mehrere Transportmittel 5 tragen. Die Transportmittel 5 sind hier als Kleiderbügel mit einem Haltemittel 25, insbesondere einem Haken 25 ausgebildet. Zur Beabstandung einzelner Haken 25 weist mindestens einer der Mitnehmer 4 vorzugsweise ein oder mehrere Ausbuchtungen 28 auf, welche dazu ausgebildet sind während des Transports jeweils einen Haken 25 zu stützen. Alternativ oder in Ergänzung zu den Ausbuchtungen 28 sind auch Vertiefungen denkbar. Das Fördermittel 3 bewegt während des Betriebs die Kleiderbügel 5 im Förderrichtung X entlang der Schiene 2.

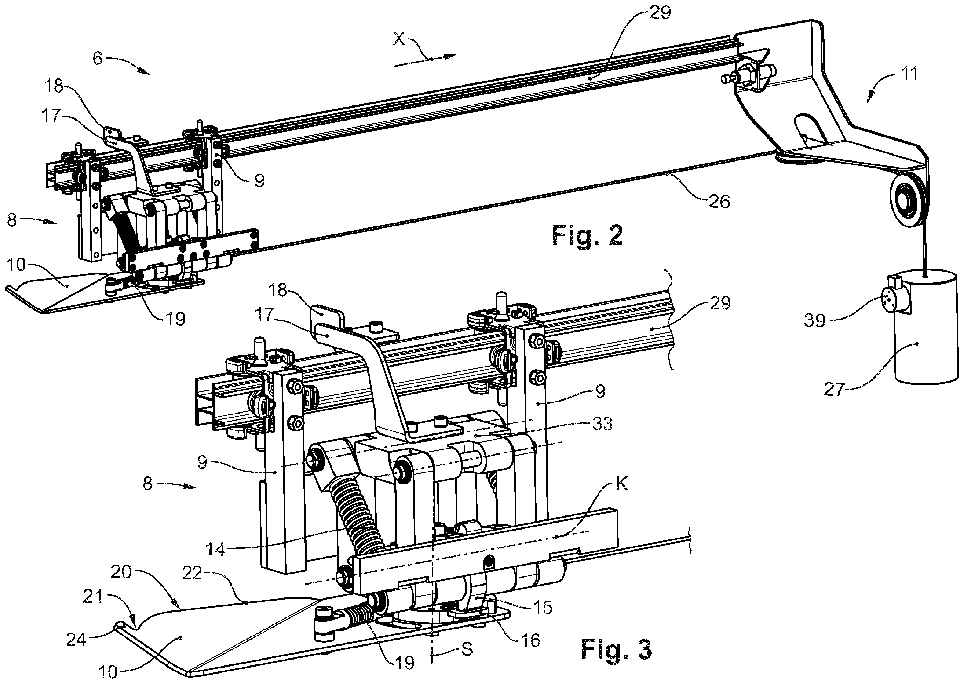

**Figur 2** zeigt eine erste Ausführungsform einer Räumungsanordnung gemäss der Offenbarung in einer perspektivischen Darstellung und **Figur 3** zeigt eine vergrösserte Ansicht der ersten Ausführungsform einer Räumungsanordnung gemäss der Offenbarung. Die in **Figur 2** dargestellte erste Ausführungsform einer Räumungsanordnung 6 umfasst einen Abräumer 8 und eine Betätigungsanordnung 11. Die Räumungsanordnung 6 ist zur Räumung zumindest eines Abschnitts der Schiene von Transportmitteln ausgelegt. Der Abräumer 8 ist mit einem Führungslager 9 entlang des Schienenabschnitts 7 beweglich angeordnet. In der gezeigten Ausführungsform umfasst die Räumungsanordnung 6 ein Schienenstück 29, das insbesondere an der Schiene 2 des Hängeförderers 1 angeordnet ist. Das Führungslager 9 ist hierbei im Schienenstück 29, insbesondere entgegen oder in Förderrichtung X, beweglich gelagert. Die Betätigungsanordnung 11 ist dazu ausgebildet den Abräumer 8 von einem Bereitschaftszustand in einen Abräumzustand zu versetzen. In der dargestellten Ausführungsform ist die Betätigungsanordnung 11 ferner dazu ausgebildet den Abräumer 8 entlang des Schienenabschnitts zu bewegen. Die Bewegung des Abräumers 8 kann hierbei sowohl entlang als auch entgegen der Förderrichtung X erfolgen.

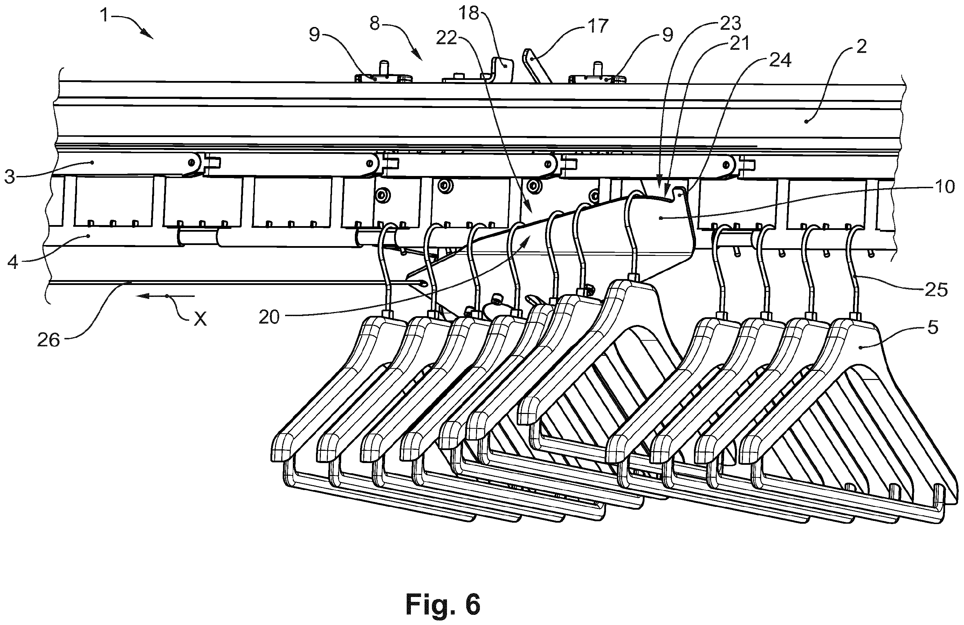

**Figur 3** zeigt in einer vergrösserten Darstellung den Abräumer 8 von **Figur 2****.** Der Abräumer 8 umfasst ein Abräumelement 10. Das Abräumelement 10 ist dazu ausgebildet im Abräumzustand durch eine Relativbewegung des Abräumers 8 zum Fördermittel die Transportmittel von den Mitnehmern im Schienenabschnitt zu lösen. Mit anderen Worten, das Abräumelement 10 löst, durch ein Entlangfahren des Abräumers 8 am Schienenabschnitt die Kleiderbügel von den Mitnehmern. Vorzugsweise ist das Abräumelement 10 ferner dazu ausgebildet im Abräumzustand die gelösten Kleiderbügel aufzunehmen und zu tragen. Hierzu weist das Abräumelement 10 vorzugsweise ein Schwert 10 mit einem Löseabschnitt 20 und einen daran angrenzenden Sammelabschnitt 21 auf. Der Löseabschnitt 20 weist insbesondere eine Kante 22 als Kontaktkontur auf. Diese Kontaktkontur 22 weist zu Beginn eine Anlaufschräge auf, die den Kontakt mit den Haltemitteln der Transportmittel während der Relativbewegung dazu herstellt. Die Kante 22 ist in der Abräumposition des Schwerts 10 derart ausgerichtet, dass diese zum Sammelabschnitt 21 hin eine Steigung zum Anheben der Transportmittel von den Mitnehmern bildet. Die Kante 22 ist in der Abräumposition des Schwerts 10 ferner derart ausgerichtet, dass diese zum Sammelabschnitt 21 hin eine schräge zum seitlichen Wegbewegen der Transportmittel von den Mitnehmernbildet. Diese Ausrichtung ist in **Figur 6** besonders gut sichtbar.

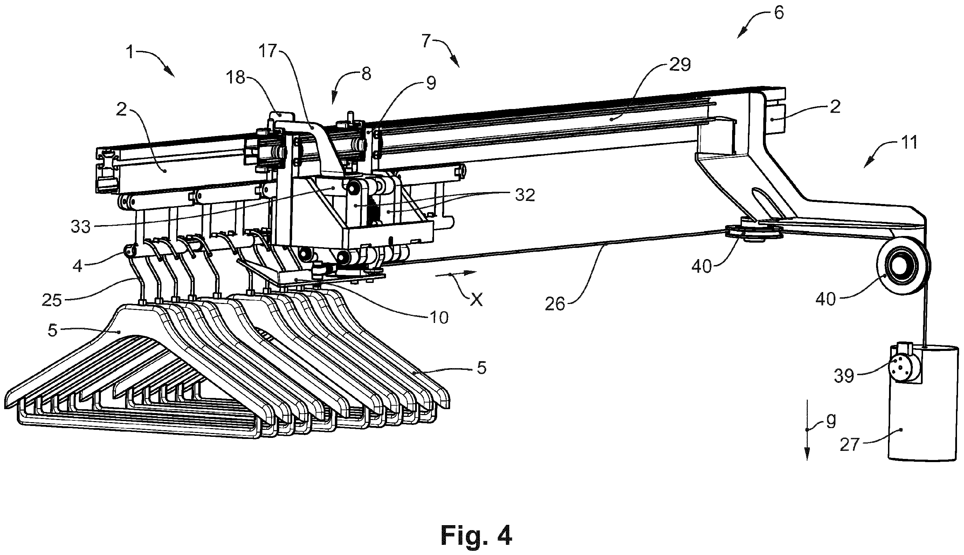

**Figur 6** zeigt den Hängeförderer von **Figur 4** mit der ersten Ausführungsform der Räumungsanordnung im Abräumzustand in einer weiteren perspektivischen Darstellungen. Wie zu erkennen ist, ist die Kante 22 in dieser Ausführungsform ausgebildet, das Anheben und das Wegbewegen der Transportmittel 5 von den Mitnehmern 4 in einer überlagerten Bewegung zu erreichen. Dies ist vorteilhaft, da ein kontrolliertes Lösen von hakenförmigen Haltemitteln 25 ermöglicht wird. Angrenzend an den Löseabschnitt 20, gegenüber der Anlaufschräge, ist der Sammelabschnitt 21 als Einbuchtung 23 ausgebildet. Die Einbuchtung 23 weist ein distales Ende auf, das als Anschlag 24, insbesondere als Nase 24 ausgebildet ist. Die Einbuchtung 23 erlaubt das sichere Tragen der gelösten Transportmittel 5 und minimiert das Risiko, dass die gelösten Transportmittel 5 herunterfallen.

Wie in **Figur 3** erkennbar ist, bildet das Führungslager 9 im Abräumzustand ein Widerlager für das Abräumelement 10, sodass ein Verdrehen des Abräumelements 10 um eine Achse parallel zur Förderrichtung X minimiert wird. Hierzu sind insbesondere doppelte Führungslager 9 vorgesehen, wobei jedes Führungslager 9 als mehrachsiges Rollenlager ausgebildet ist, um die Torsionssteifigkeit zu erhöhen. Um den Abräumer 8 entlang des Schienenabschnitts zu bewegen, weiss die Betätigungsanordnung 11 einen Seilzug 26 auf, der das Abräumelement 10 mit einem gesicherten Gewicht 27 verbindet. Das Gewicht 27 ist dazu ausgelegt, nach dessen Freigabe, mittels des Seilzugs 26 eine Zugkraft auf das Abräumelement 10 auszuüben. Vorzugsweise verbindet der Seilzug 26 das Abräumelement 10 und das Gewicht 27 über ein oder mehrere Umlenkrollen 40.

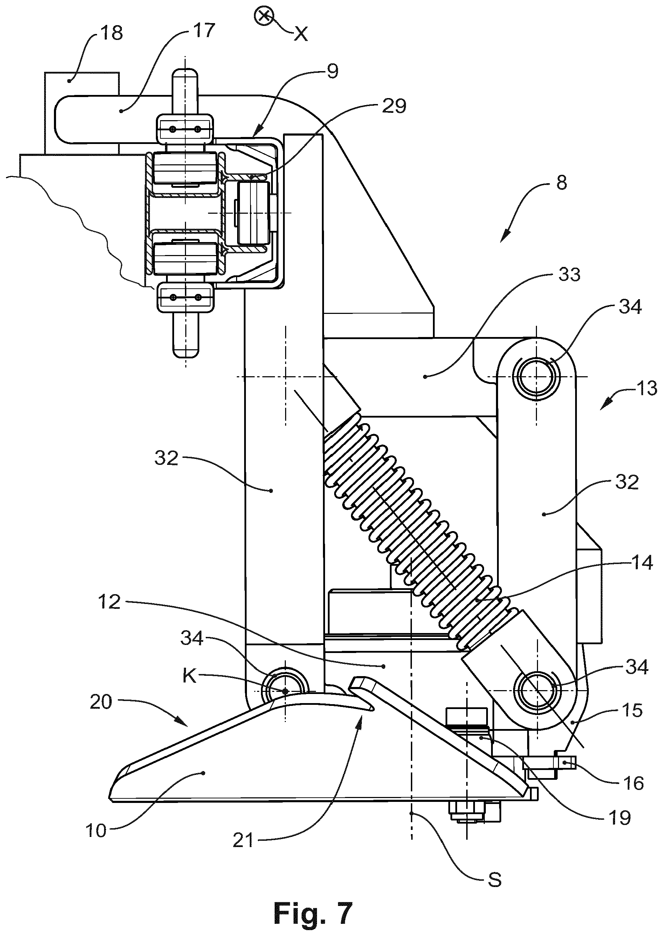

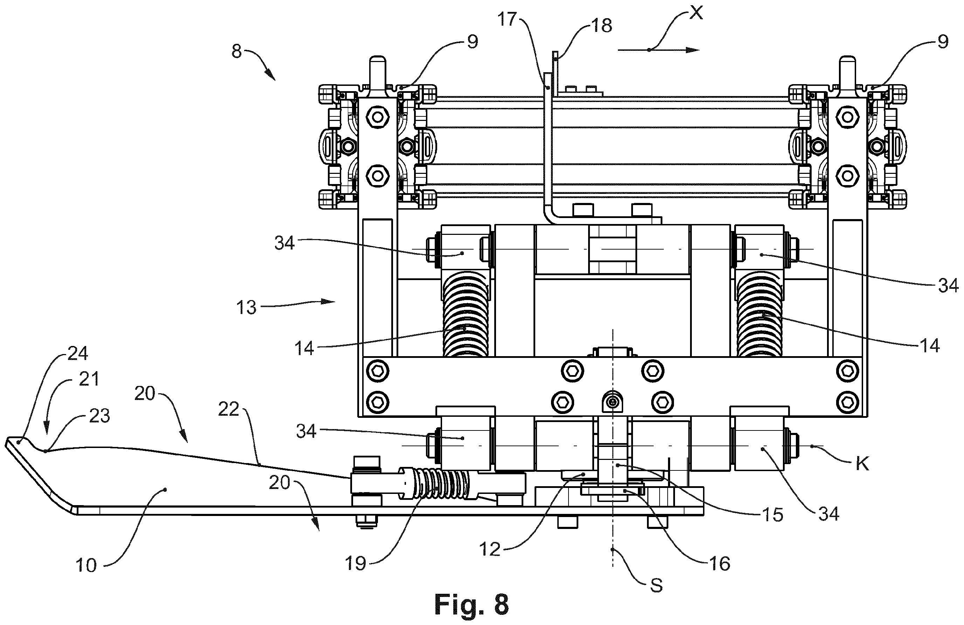

Die Figuren 7 und 8 zeigen jeweils eine Seitenansicht des Abräumers 8. Nachfolgend wird insbesondere Bezug nehmend auf diese Figuren der Abräumer 8 detaillierter beschrieben. In der dargestellten Ausführungsform des Abräumers 8 ist das Abräumelement 10 an einer Basis 12 des Abräumers 8 zwischen einer Bereitschaftsposition und eine Abräumposition um eine Schwenkachse S schwenkbar angeordnet. Die Schwenkachse S ist in der Bereitschaftsposition im Wesentlichen parallel zur Schwerkraft g orientiert, wobei auch alternative Ausgestaltungen denkbar sind. Je nach Ausgestaltung ist das Abräumelement 10 in Richtung seiner allgemeinen Ausdehnung im Bereitschaftszustand parallel zur Förderrichtung X ausgerichtet. Das Abräumelement 10 ist in der Regel zwischen 20 und 90 Grad, vorzugsweise um 30 bis 70 Grad zwischen der Bereitschaftsposition und der Abräumposition schwenkbar. Insbesondere ist das Abräumelement 10 derart an der Basis 12 schwenkbar gelagert, dass die Schwenkbewegung beim Erreichen der Abräumposition gestoppt wird.

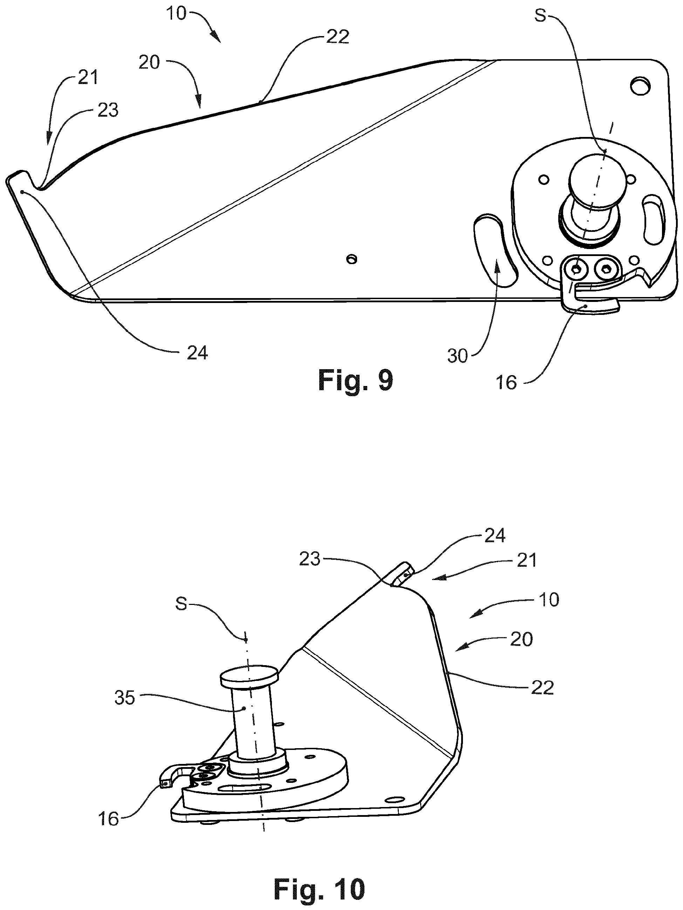

**Figur 9** zeigt ein Abräumelement des Abräumers der ersten Ausführungsform in einer perspektivischen Ansicht von Oben und **Figur 10** zeigt das Abräumelement von **Figur 9** in einer perspektivischen seitlichen Ansicht. Das in den **Figuren 9** und **10** detailliert dargestellte und als Schwert 10 ausgebildete Abräumer Element 10, weisst hierfür eine als Führungskulisse ausgebildete Aussparung 30 auf in welche die Basis eingreift. Der Abräumer 8 weist ferner eine Kippvorrichtung auf. Die Kippvorrichtung ist zwischen dem Führungslager und dem Abräumelement 10 angeordnet und dazu ausgebildet, das Abräumelement 10 relativ zum Führungslager um eine Kippachse K von einer Bereitschaftsposition in eine Kippposition zu bewegen. Wie insbesondere in **Figur 7** zu erkennen ist, wird dies insbesondere dadurch erreicht, dass die Basis 12 um die Kippachse K geneigt wird, wenn der Abräumer 8 vom Bereitschaftszustand in den Abräumzustand versetzt wird. Typischerweise ist die Kippachse K parallel zur Förderrichtung X angeordnet. In der dargestellten Ausführungsformen ist die Kippvorrichtung 13 als Parallelogramm ausgebildet. Das Parallelogramm weisst wenigstens zwei parallele Verbindungselemente 32 auf, die jeweils das Oberteil 33 und die Basis 12 über Drehlager miteinander verbinden. Die Kippachse K ist parallel zu den Rotationsachsen der Drehlager des Parallelogramms. Insbesondere ist die Kippachse K identisch mit der Rotationsachse des der Schiene 2 zugewandten Drehlagers 34 der Basis 12 dem Verbindungselement 32.

Wie besonders gut in **Figur 10** erkennbar, ist das Abräumelement 10 mittels eines drehbar gelagerten Bolzens 35 an der Basis befestigt. In **Figur 8** ist zu erkennen, dass die Kippvorrichtung 13 vorzugsweise mindestens ein Federelement 14 aufweist, das in der Bereitschaftsposition vorgespannt und durch einen Rückhalteelement 15 arretiert ist. Das Rückhalteelement 15 ist in der Bereitschaftsposition von einem Sicherungsfinger 16 des Abräumelements 10 gesichert, so dass der Sicherungsfinger 16 durch das Verschwenken des Abräumelements 10 das Rückhalteelement 15 freigibt. Das vorgespannte Federelement 14 ist dazu ausgelegt, nach dessen Freigabe, das Abräumelement 10 von der Bereitschaftsposition in die Kippposition zu bewegen, wobei hierzu die Basis 12 um die Kippachse K geneigt wird. In der dargestellten Ausführungsform, siehe **Figur 7****,** ist das mindestens eine Federelement 14 zwischen gegenüberliegenden Drehlagern 34 des Parallelogramms diagonal angeordnet. Das Federelement 14 bewirkt nach dessen Freigabe eine Parallelverschiebung der Verbindungselemente 32, sodass die Basis 12 und damit das Abräumelement 10 um die Kippachse K verkippt werden.

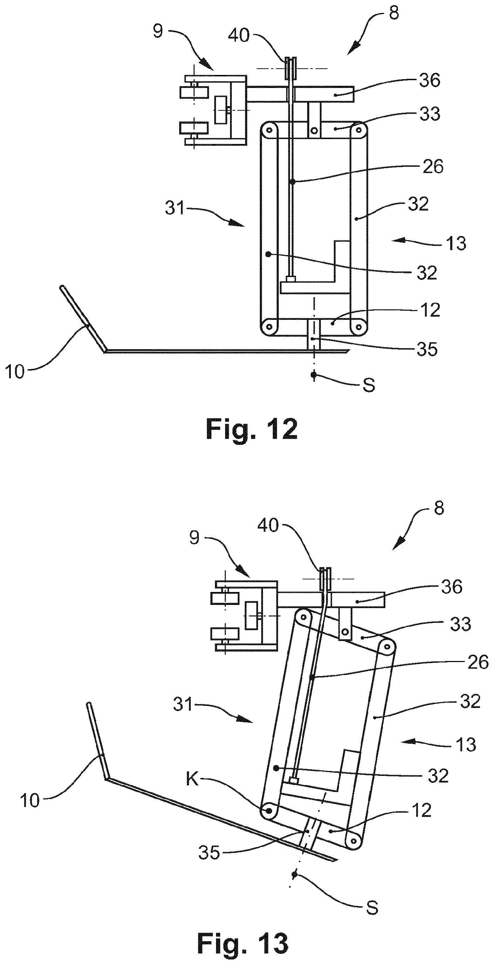

**Figuren 12** und **13** zeigen eine dritte Ausführungsform des Abräumers 8 mit einer alternativ ausgestalteten Kippvorrichtung 13. In dieser Ausführungsform ist der Seilzug 26 der Betätigungsvorrichtung mit einem der Verbindungselemente 32 des Parallelogramms 31 verbunden. Das Oberteil 33 des Parallelogramms 31 ist hierbei parallel zur Basis 12 neigbar und mittig an einem Kragarm 36 kippbar aufgehängt. Der Kragarm 36 erstreckt sich im Wesentlichen waagerecht und verbindet das Führungslager 9 mit der Kippvorrichtung 13. **Figur 12** zeigt den Abräumer 8 im Bereitschaftszustand und **Figur 13** zeig den Abräumer 8 im Abräumzustand. Die nicht vollständig dargestellte Betätigungsanordnung ist dazu eingerichtet eine Zugkraft auf den Seilzug 26 auszuüben, sodass diese in das Verbindungselement 32 eingeleitet wird und das Parallelogramm 31 derart verschoben, bzw. deformiert wird, das die Basis 12 verkippt wird. Das an der Basis 12 angebrachte Abräumelement 10 wird dabei in die Kippposition beziehungsweise in die Abräumposition bewegt.

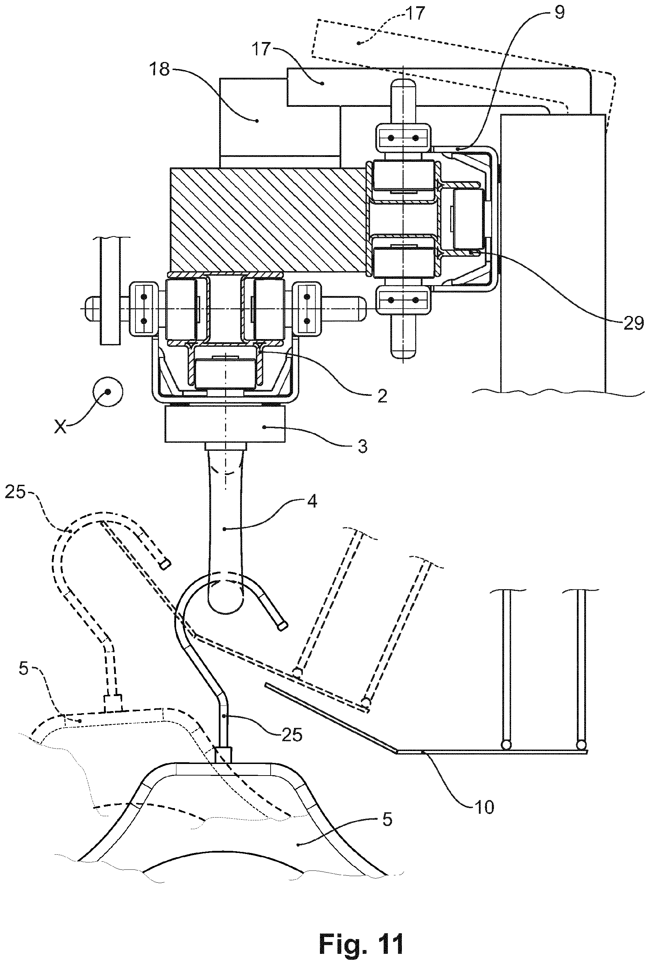

Die gezeigten Ausführungsformen umfassen vorzugsweise ein Stoppelement, das an der Kippvorrichtung angeordnet ist, und insbesondere am Oberteil 33 angeordnet ist. Der Abräumer 8 kann derart ausgestaltet sein, das in der Bereitschaftsposition das Stoppelement an einem, in Bezug auf den Schienenabschnitt, fixen Anschlag anliegt. Dieser Anschlag hält den Abräumer 8 in einer Startposition, wenn das Stoppelement daran anliegt. In der Kippposition ist das Stoppelement vom Anschlag gelöst und gibt die Bewegung des Abräumers 8 entlang des Schienenabschnitts 7 frei. **Figur 11** zeigt eine schematische Schnittdarstellung eine zweite Ausführungsform des Abräumers, wobei die durchgezogenen Linien den Bereitschaftszustand andeuten und die gestrichelten Linien den Abräumzustand. Hier sind die Positionen des Stoppelements 17 gut erkennbar. Die zweite Ausführungsform des Hängeförderers 1 von **Figur 11** zeichnet sich durch ein anderes Fördermittel 3. Das Fördermittel 3 umfasst hier neben einem angedeuteten Antriebsmittel eine Vielzahl einzelner Laufwagen an denen die Kleiderbügel 5 mit ihren Haken 25 gehalten sind.

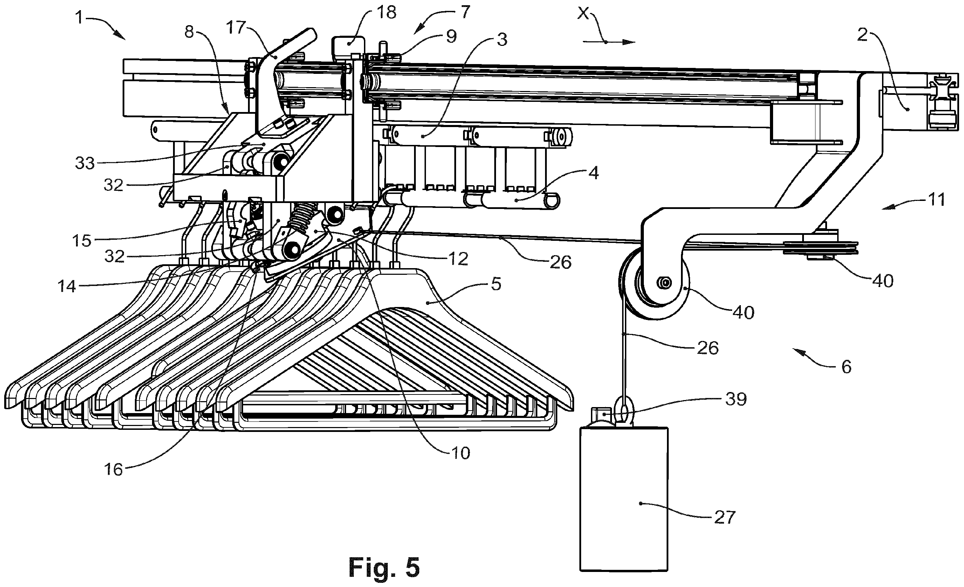

**Figur 4** zeigt einen Schienenabschnitt 7 eines Hängeförderers 1 gemäss der Offenbarung mit der ersten Ausführungsform der Räumungsanordnung 6 im Bereitschaftszustand in einer perspektivischen Darstellung und **Figur 5** zeigt den Hängeförderer 1 von **Figur 4** mit der ersten Ausführungsform der Räumungsanordnung 6 im Abräumzustand in einer perspektivischen Darstellung. Je nach Ausführungsform, insbesondere in **Figur 5****,** ist der Befestigungspunkt des Seilzugs 26 am Abräumelement 10 von der Schwenkachse nach aussen hin versetzt angeordnet. Hierdurch führt die vom Seilzug 26 in das Schwert 10 eingeleitete Zugkraft zu einem Drehmoment welches auf das Schwerts 10 einwirkt.. Dies erlaubt ein Verschwenken des Schwerts 10 um die Schwenkachse. Wie in den **Figuren 3** und **8** erkennbar kann ein Federelement 19 zwischen dem Abräumelement 10 und der Basis 12 angeordnet sein. Beim Verschwenken das Abräumelements 10 von der Bereitschaftsposition in die Abräumposition überwindet das Federelement 19 einen Totpunkt, so dass ein Zurückschwenken erschwert wird. Ferner wird das Schwert 10 in der Bereitschaftsposition gegen ein unerwünschtes Verschwenken in die Abräumposition durch das Federelement 19 gesichert.

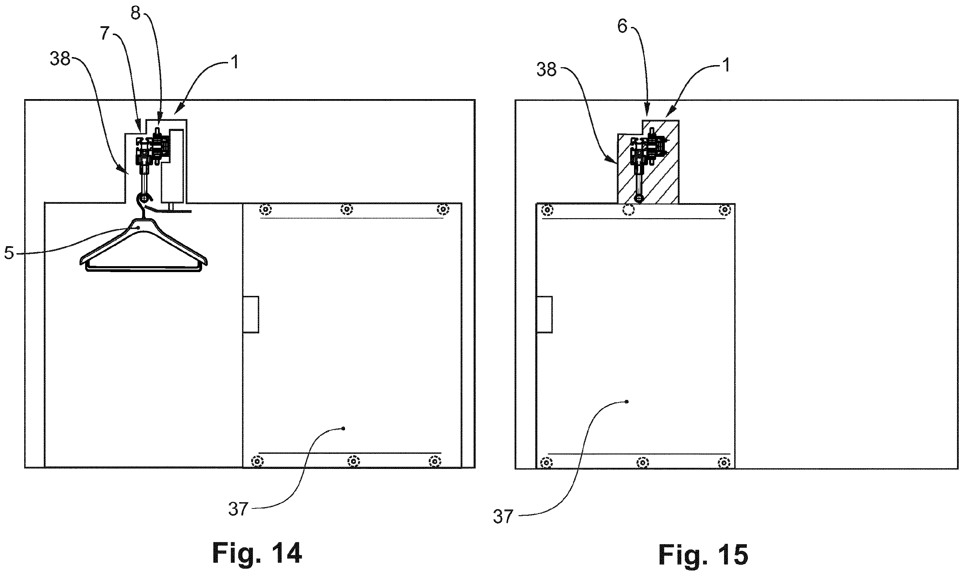

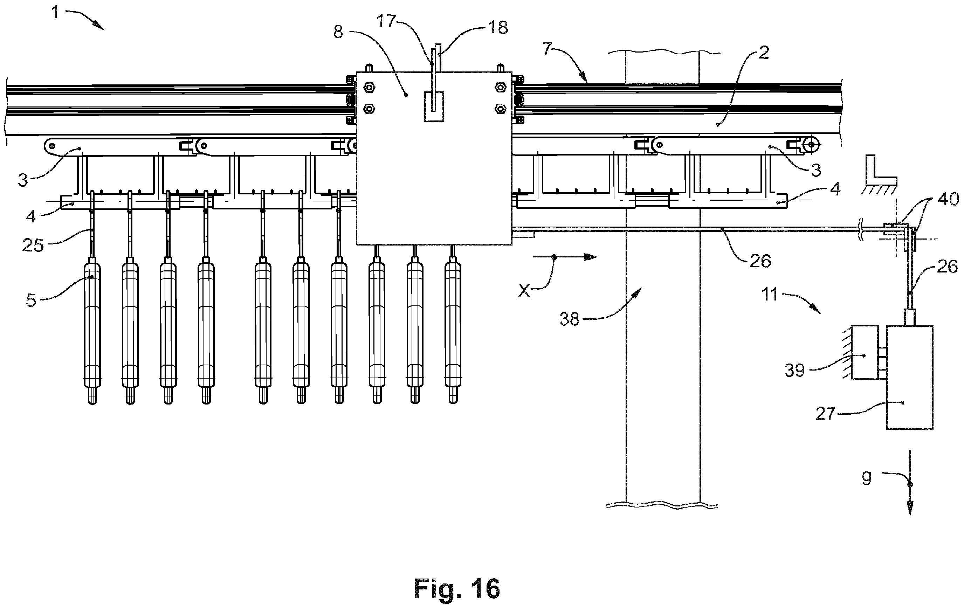

Die **Figuren 14** und **15** zeigen eine Einbausituation der ersten Ausführungsform des Hängeförderers 1 an einer Brandschutztür 37 und einer oberhalb davon angeordneten Durchführung 38 für den Hängeförderer 1. **Figur 14** zeigt den Hängeförderer 1 während des Betriebs und **Figur 15** zeigt denselben Hängeförderer 1 mit der Brandschutztür 37 im geschlossenen Zustand, wobei die Durchführung 38 mit einem Schutzmaterial gefüllt ist (beispielsweise mit Schaum). **Figur 16** zeigt die Situation von **Figur 14** in einer Seitenansicht. Erkennbar ist der Abräumer 8 welcher sich an einem Ende des zu räumenden Schienenabschnitts 7 befindet und über den Seilzug mit dem Gewicht verbunden ist. Zum besseren Verständnis befinden sich in der dargestellten Situation Transportmittel 5 im Schienenabschnitt 7. Für eine autonome Funktionsweise der Räumungsanordnung 6 ist das Gewicht mittels eines Elektromagneten gesichert. Ein möglicher zeitlicher Ablauf der Räumung kann der Folgende sein, wobei dem Fachmann klar ist, dass deren Reihenfolge nicht zwingend der Beschriebenen entsprechen muss und optionale Schritte enthalten sind.

**Figuren 1** bis **3** zeigen, dass im Fall, dass der Schienenabschnitt 7 von Transportmitteln 5 geräumt werden soll, wird der Elektromagnet 39 abgeschaltet und damit das Gewicht 27 freigegeben. Das Gewicht 27 übt in der Folge mit seiner Gewichtskraft eine Zugkraft über den Seilzug 26 auf das Schwert 10 aus. Das Schwert 10 wird dadurch um die Schwenkachse S verschwenkt und der Sicherungsfinger 16 des Schwerts 10 gibt nach einer Teilverschwenkung das Rückhalteelement 15 der Kippvorrichtung 13 frei. Nach der Freigabe des Rückhalteelements 15 wird das Parallelogramm der Kippvorrichtung 13 durch das vorgespannte Federelement 14 parallelverschoben, und die Basis 12 um die Kippachse K verkippt bzw. geneigt. Hierdurch entsteht insbesondere im zweiten Teil der Schwenkbewegung des Schwertes 10 eine Überlagerung der Schwenkbewegung mit der Kippbewegung des Schwertes 10. Durch die Verkippung der Kippvorrichtung 13 wird das am Oberteil 33 angeordnete Stoppelement 17 vom Anschlag 18 getrennt. Nun ist der Abräumer 8 in der Abräumposition, wobei die Kante 22 des Schwertes 10 mit den Haltemitteln 25 der Transportmittel 5 in Eingriff kommt. Da das Stoppelement 17 vom Anschlag 18 gelöst ist, wird der Abräumer 8 vom Gewicht 27 über den Seilzug 26 am Schienenabschnitt 7 entlang gegen die Förderrichtung X bewegt, dies ist in den **Figuren** 5 und 6 erkennbar. Durch die Relativbewegung des Schwertes 10 werden die Haltemittel 25, beziehungsweise die Kleiderbügel 5 der gezeigten Ausführungsformen, in einer überlagerten Bewegung von der Kante 22 angehoben und seitlich von den Mitnehmen 4 wegewegt und damit gelöst. Die durch das Schwert 10 gelösten Kleiderbügel 5 werden im Sammelabschnitt 21 des Schwertes 10 gesammelt und aus dem Schienenabschnitt 7 herausbefördert.

Die in der Beschreibung verwendeten Worte sind eher beschreibend als einschränkend, und es versteht sich, dass verschiedene Änderungen vorgenommen werden können, ohne dass der Umfang der Offenbarung verlassen wird.

## Patentansprüche

1. Hängeförderer (1) umfassend
a. eine Schiene (2) und ein Fördermittel (3) das in einer Förderrichtung (x) beweglich an der Schiene (2) gelagert ist und Mitnehmer (4) zur lösbaren Halterung von hängenden Transportmitteln (5) umfasst; und
b. eine Räumungsanordnung (6) zur Räumung zumindest eines Abschnitts (7) der Schiene (2) von Transportmitteln (5), wobei die Räumungsanordnung (6) einen Abräumer (8) mit einem Abräumelement (10) umfasst, welches mit den an der Schiene (2) angeordneten Transportmitteln (5) in Eingriff bringbar ist, und
c. eine Betätigungsanordnung (11), die dazu ausgebildet ist den Abräumer (8) von einem Bereitschaftszustand in einen Abräumzustand zu versetzten, wobei die Transportmittel (5) durch das Abräumelement (10) im Abräumzustand durch eine Relativbewegung des Abräumers (8) zum Fördermittel (3) von den Mitnehmern (4) im Schienenabschnitt (7) lösbar sind.

2. Hängeförderer (1) gemäss Anspruch 1, wobei das Abräumelement (10) dazu ausgebildet ist, im Abräumzustand die vom Mitnehmer (4) gelösten Transportmittel (5) zu tragen.

3. Hängeförderer (1) gemäss Anspruch 1 oder 2, wobei der Abräumer (8) ein Führungslager (9) umfasst, mittels dem der Abräumer (8) an der Schiene (2) beweglich angeordnet ist und im Abräumzustand mittels der Betätigungsanordnung (11) entlang des Abschnitts (7) der Schiene (2) bewegbar ist, vorzugsweise entlang eines Schienenstücks (29).

4. Hängeförderer (1) gemäss Anspruch 2 oder 3, **wobei** das Führungslager (9) im Abräumzustand ein Widerlager für das Abräumelement (10) bildet, sodass ein Verdrehen des Abräumelements (10) um eine Achse parallel zur Förderrichtung (X) minimiert wird.

5. Hängeförderer (1) gemäss einem der vorherigen Ansprüche, **wobei** das Abräumelement (10) an einer Basis (12) des Abräumers (8) zwischen einer Bereitschaftsposition und einer Abräumposition um eine Schwenkachse (S) schwenkbar angeordnet ist.

6. Hängeförderer (1) gemäss einem der vorherigen Ansprüche, **wobei** der Abräumer (8) eine Kippvorrichtung (13) aufweist, die zwischen dem Führungslager (9) und dem Abräumelement (10) angeordnet und dazu eingerichtet ist, das Abräumelement (10) relativ zum Führungslager (9) um eine Kippachse (K) von einer Bereitschaftsposition in eine Kippposition zu bewegen, und insbesondere die Basis (12) um die Kippachse (K) zu neigen, wenn der Abräumer (8) vom Bereitschaftszustand in den Abräumzustand versetzt wird.

7. Hängeförderer (1) gemäss einem der Ansprüchen 5 oder 6, **wobei** die Kippvorrichtung (13) mindestens ein Federelement (14) aufweist, das in der Bereitschaftsposition vorgespannt und durch ein Rückhalteelement (15) arretiert ist, wobei das Rückhalteelement (15) von einem Sicherungsfinger (16) des Abräumelements (10) gesichert ist, sodass der Sicherungsfinger (16) durch das Verschwenken des Abräumelements (10) das Rückhalteelement (15) freigibt und das vorgespannte Federelement (14) das Abräumelement (10) von der Bereitschaftsposition in die Kippposition bewegt, insbesondere kippt.

8. Hängeförderer (1) gemäss einem der Ansprüche 6 oder 7, **wobei** ein Stoppelement (17) an der Kippvorrichtung (13) angeordnet ist, das in der Bereitschaftsposition an einem in Bezug auf den Schienenabschnitt (7) fixen Anschlag (18) anliegt, um den Abräumer (8) in einer Startposition zu halten und die Bewegung des Abräumers (8) entlang des Schienenabschnitts (7) in der Kippposition freizugeben.

9. Hängeförderer (1) gemäss einem der Ansprüche 5 bis 8, **wobei** ein Federelement (19) das Abräumelement (10) und die Basis (12) verbindet, sodass das Abräumelement (10) über einen Totpunkt von der Bereitschaftsposition in die Abräumposition schwenkbar ist und ein Zurückschwenken erschwert wird.

10. Hängeförderer (1) gemäss einem der vorherigen Ansprüche, **wobei** das Abräumelement (10) ein Schwert (10) mit einem Löseabschnitt (20) und einem daran angrenzenden Sammelabschnitt (21) aufweist.

11. Hängeförderer (1) gemäss Anspruch 10, **wobei** der Löseabschnitt (20) eine Kontaktkontur (22), insbesondere eine Kante (22), aufweist, die in der Abräumposition des Schwerts (10) derart ausgerichtet ist, dass diese zum Sammelabschnitt (21) hin eine Steigung zum Anheben der Transportmittel (5) von den Mitnehmern (4) bildet und/oder dass diese zum Sammelabschnitt (21) hin eine Schräge zum seitlichen Wegbewegen der Transportmittel (5) von den Mitnehmern (4) bildet, wobei die Steigung und die Schräge vorzugsweise derart ausgerichtet sind, dass Anheben und Wegbewegen der Transportmittel (5) von den Mitnehmern (4) vorzugsweise in einer überlagerten Bewegung erfolgen.

12. Hängeförderer (1) gemäss einem der Ansprüche 10 oder 11, **wobei** der Sammelabschnitt (21) als Einbuchtung (23) ausgebildet ist, deren distales Ende von einem Anschlag, insbesondere von einer Nase (24) gebildet ist.

13. Hängeförderer (1) gemäss einem der vorherigen Ansprüche, **wobei** die Transportmittel (5) hakenförmige Haltemittel (25) aufweisen, und die Transportmittel (5) insbesondere als Kleiderbügel und/oder Transporttaschen ausgebildet sind.

14. Hängeförderer (1) gemäss einem der vorherigen Ansprüche, **wobei** die Schwenkachse (S) und die Kippachse (K) im Wesentlichen senkrecht zueinander und/oder die Schwenkachse (S) und die Kippachse (K) im Wesentlichen jeweils senkrecht zur Förderrichtung (x) angeordnet sind.

15. Hängeförderer (1) gemäss einem der vorherigen Ansprüche, **wobei** das Fördermittel (3) ein kontinuierliches Umlauffördermittel ist.

16. Hängeförderer (1) gemäss einem der vorherigen Ansprüche, **wobei** die Betätigungsanordnung (11) einen Seilzug (26) aufweist, der das Abräumelement (10) mit einem gesicherten Gewicht (27) verbindet, wobei das Gewicht (27) dazu ausgelegt ist, nach Freigabe mittels Seilzug (26) eine Zugkraft auf das Abräumelement (10) auszuüben.

17. Hängeförderer (1) gemäss einem der vorherigen Ansprüche 6 bis 16, **wobei** die Kippvorrichtung (13) als Parallelogramm ausgebildet ist und das mindestens eine Federelement (14) zwei Ecken des Parallelogramms diagonal verbindet.

18. Verfahren zum bereichsweisen Abräumen einer Schiene (2) eines Hängeförderers (1) umfassend die folgenden Schritte:
a. Bereitstellen eines Hängeförderers (1) umfassend eine Schiene (2) und ein Fördermittel (3) das in einer Förderrichtung (x) beweglich an der Schiene (2) gelagert ist und Mitnehmer (4) zur lösbaren Halterung von hängenden Transportmitteln (5) umfasst;
b. Bereitstellen einer Räumungsanordnung (6) entlang eines Abschnitts (7) der Schiene (2), die einen Abräumer (8) mit einem Abräumelement (10) umfasst, sowie einer Betätigungsanordnung (11), die dazu ausgebildet ist den Abräumer (8) von einem Bereitschaftszustand in einen Abräumzustand zu versetzten;
c. In Eingriff bringen des Abräumelements (10) mit den Transportmitteln (5) und Überführen des Abräumelements (10) in einen Abräumzustand durch eine Relativbewegung des Abräumers (8) zum Fördermittel (3) wodurch die Transportmittel (5) von den Mitnehmern (4) im Schienenabschnitt (7) gelöst werden.

19. Verfahren gemäss Anspruch 18, **wobei** der Abräumer (8) ein Führungslager (9) umfasst, mittels dem der Abräumer (8) an dem Schienenabschnitts (7) beweglich angeordnet ist und im Abräumzustand mittels der Betätigungsanordnung (11) entlang des Schienenabschnitts bewegt wird, vorzugsweise entlang eines Schienenstücks (29).

20. Verfahren gemäss Anspruch 18 oder 19, **wobei** das Abräumelement (10) an einer Basis (12) des Abräumers (8) zwischen einer Bereitschaftsposition und einer Abräumposition um eine Schwenkachse (S) schwenkbar angeordnet ist und der Abräumer (8) eine Kippvorrichtung (13) aufweist und das Abräumelement (10) in der Abräumposition relativ zum Führungslager (9) um eine Kippachse (K) von einer Bereitschaftsposition in eine Kippposition bewegt.

21. Verfahren gemäss Anspruch 20, **wobei** die Kippvorrichtung (13) mindestens ein Federelement (14) aufweist, welches in der Bereitschaftsposition vorgespannt und durch ein Rückhalteelement (15) arretiert ist, wobei das Rückhalteelement (15) im Abräumzustand das vorgespannte Federelement (14) freigibt und durch das Federelement (14) das Abräumelement (10) von der Bereitschaftsposition in die Kippposition bewegt wird.

22. Verfahren gemäss Anspruch 21, **wobei** ein Stoppelement (17) an der Kippvorrichtung (13) angeordnet ist, das in der Bereitschaftsposition an einem in Bezug auf den Schienenabschnitt (7) fixen Anschlag (18) anliegt und den Abräumer (8) in einer Startposition hält und die Bewegung des Abräumers (8) in dem Abräumzustand freigibt.
